Europäisches Patentamt

European Patent Office

Office européen des brevets

(19)

(11) Numéro de publication: **0 286 527**
**A1**

## (12) DEMANDE DE BREVET EUROPEEN

(21) Numéro de dépôt: **88400808.7**

(22) Date de dépôt: **01.04.88**

(51) Int. Cl.⁴: **F 16 F 13/00**

(30) Priorité: **03.04.87 FR 8704787**

(43) Date de publication de la demande:
**12.10.88 Bulletin 88/41**

(84) Etats contractants désignés:
**AT BE CH DE ES FR GB GR IT LI LU NL SE**

(71) Demandeur: **CAOUTCHOUC MANUFACTURE ET PLASTIQUES**
**143bis, rue Yves le Coz**
**F-78005 Versailles (FR)**

(72) Inventeur: **de Fontenay, Etienne**
**14, rue du Levant**
**F-58300 Decize (FR)**

(54) **Support élastique à amortissement hydraulique intégré avec cloison rigide à circuit de liquide ajustable.**

(57) Isolation antivibratoire à amortissement hydraulique intégré, constitué d'une membrane conique épaisse en composition élastomérique adhérisée à des armatures rigides interne et externe et sertie dans un boitier enfermant un liquide d'amortissement, caractérisée en ce que la cloison rigide qui sépare la chambre à volume variable du volume d'expansion comporte un canal pour le liquide d'amortissement (8), réalisé en une ou deux parties, dont les dimensions peuvent être réglées par usinage de l'un au moins des constituants - base (10) ou couvercle - de ladite cloison rigide, ou insertion de cales entre lesdits constituants, permettant ainsi, à partir d'un ensemble de composants identiques, de réaliser une gamme de supports élastiques à caractéristiques d'amortissement adaptées aux fréquences d'utilisation.

EP 0 286 527 A1

**Description**

L'invention concerne le domaine des isolations antivibratoires de machines, plus particulièrement les supports élastiques de moteurs d'automobiles ou de cabines de poids lourds. Elle est relative aux supports à grande flexibilité avec amortissement hydraulique intégré accroissant la rigidité apparente, dans une gamme de fréquences assez basses très limitée, au moyen d'une colonne liquide de grande longueur par rapport à sa section, dont la résonance s'oppose aux déplacements de grande amplitude sans néanmoins détruire un filtrage élastique à des fréquences plus élevées.

Une famille de tels supports élastiques est généralement réalisée au moyen d'une membrane conique épaisse en composition élastomérique qui, adhérisée à un boitier porteur et à une armature centrale de fixation au carter à suspendre, groupe motopropulseur par exemple, enferme une chambre contenant un liquide amortisseur que l'on refoule dans un volume d'expansion, sous faible pression, à travers un dispositif à longue colonne d'inertie, la plus grande part de la charge verticale étant portée par déformation de l'élastomère constituant la membrane conique.

Les brevets français 2.443.615, 2.462.618, 2.467.724 et 2.511.105 de PEUGEOT décrivent des dispositifs répondant à cette définition et qui présentent l'avantage d'intégrer, à l'intérieur du dispositif élastique, la colonne amortissante, ménagée dans une paroi rigide noyée dans le circuit hydraulique ainsi constitué, après scellement - par exemple par sertissage sur un couvercle de fixation pour le boitier - du support ainsi devenu monobloc.

Divers perfectionnements ont été apportés à ces dispositifs. Par exemple, le dispositif à base de gicleur à freinage hydrodynamique (brevet français 2.430.546 de CHRYSLER) comporte un transfert de liquide à masse résonante, métallique et jouant le rôle de batteur amorti, dans ce cas. D'autres portent sur la masse même du liquide, - un ajustement des caractéristiques permettant ainsi une faible raideur aux vibrations de fréquences supérieures à 25 Hertz, efficace sur l'insonorisation générale, et un bon amortissement aux fréquences de suspension - dans la gamme de 5 à 15 Hertz - qui deviennent sensibles pour les passagers si l'amplitude des mouvements communiqués à la structure dépasse le millimètre.

Le brevet français 2.575.253 prévoit, sur ce type d'amortisseur hydraulique dit "cale à colonne", une mise en parallèle d'un second passage étranglé différent du canal principal.

L'analyse de l'art antérieur montre, à l'évidence, que des supports hydroélastiques à colonne de liquide de grande longueur (éventuellement supérieure à la longueur d'un canal annulaire), ajustables de manière simple, à différentes modalités d'emploi ne sont pas connus.

L'invention a pour objectif la réalisation d'un canal pour le liquide d'amortissement, ménagé dans la cloison rigide de séparation entre la chambre à volume variable et le volume d'expansion d'un support hydroélastique, ledit canal étant ajustable, en longueur et/ou en section, afin de régler les caractéristiques des supports hydroélastiques, pour adapter, avec précision, les courses et les fréquences nécessaires pour des applications particulières, en jouant sur la masse du liquide contenue dans ce canal et sur la surface de la couche limite, cisaillée lors des mouvements alternatifs du liquide.

L'invention se propose, à partir de constituants identiques - à l'exception de la cloison rigide - , c'est-à-dire pour les mêmes dimensions de la chambre à volume variable et du volume d'expansion, et pour la même rigidité de la membrane conique épaisse constituant la paroi déformable, de créer une gamme de supports hydroélastiques à caractéristiques d'amortissement adaptées à chaque application, - dans des conditions économiques autorisant les petites séries de fabrication - en agissant sur les paramètres de la colonne de liquide d'amortissement, à savoir sa section et/ou sa longueur.

Le support élastique d'isolation antivibratoire à amortissement hydraulique intégré, objet de l'invention est caractérisé en ce que :
- il comprend un canal, réalisé en une ou deux parties destiné à contenir le liquide d'amortissement,
- ce canal, lorsqu'il est réalisé en une partie, est constitué soit par une spirale, soit par une hélice, ce qui autorise une longueur du canal supérieure à une circonférence,
- le canal, lorsqu'il est réalisé en deux parties, est constitué soit de deux spirales imbriquées, ayant même centre, soit de deux hélices imbriquées, de même axe,
- les dimensions, (longueur et/ou section) du canal pour liquide d'amortissement peuvent être ajustées, par des moyens mécaniques simples tels qu'un usinage, l'insertion d'une cale entre la base et le couvercle de la cloison rigide, ou la rotation de l'un de ces constituants par rapport à l'autre, afin d'adapter la colonne de liquide d'amortissement aux fréquences voulues pour les différentes applications.

Les différents procédés de réglage des dimensions du canal pour liquide d'amortissement, pris séparément ou en combinaison dans certains cas où ils sont compatibles, sont les suivants :

Pour agir sur la longueur du canal, il est possible :
- d'agir sur le diamètre de l'alésage où il débouche sur la cloison rigide, par usinage. Ce procédé s'applique au cas d'un canal en une seule ou en deux parties, en forme de spirale(s) ;
- d'excentrer l'alésage, dans le cas d'un canal en deux parties, en forme de spirales, le réglage de longueur se faisant alors indépendamment sur les deux parties du canal ;
- d'utiliser la rotation du couvercle par rapport à la base de la cloison rigide, au moment de l'assemblage, dans le case d'un canal pour liquide d'amortissement en une ou deux parties hélicoïdale(s). Le réglage de longueur étant alors le même pour les deux parties hélicoïdales du canal.

Pour agir sur la section du canal pour liquide d'amortissement, il est possible :

- de procéder à un usinage plan de l'une au moins des faces d'assemblage de la base et du couvercle de la cloison rigide, ce qui a pour conséquence de réduire la section du canal, en une ou deux parties, en forme de spirale(s) ou d'hélicoïde(s), le réglage des deux parties en spirales ou hélicoïdales étant alors le même ;

- de procéder à une usinage oblique de l'une au moins des faces d'assemblage de la base et du couvercle de la cloison rigide, ce qui présente un intérêt pour la réduction de section du canal en deux parties, en forme de spirales ou d'hélices, en permettant d'adopter un réglage différent pour chacune des spirales ou des hélices ;

-l'insertion d'une cale plane entre la base et le couvercle de la cloison rigide, qui permet d'accroître la section, procédé applicable aux cas où le canal pour liquide d'amortissement est constitué d'une ou deux parties, en spirales ou en hélices, (le réglage des deux parties dudit canal étant alors le même) ;

- l'insertion d'une cale oblique entre la base et le couvercle de la cloison rigide qui présente un intérêt dans le cas d'un canal en deux parties, en forme de spirale(s) ou d'hélice(s), en permettant d'adopter un réglage différent pour l'accroissement de section de chacune des spirales ou des hélices.

Les caractéristiques et variantes de l'invention seront mieux comprises à la lecture de la description accompagnant les dessins, dans lesquels :

- la figure 1 schématise le support élastique à amortissement hydraulique intégré et situe la cloison rigide dans laquelle est ménagé le canal pour liquide d'amortissement ;

- la figure 2 détaille une configuration particulière de la cloison rigide dans laquelle le canal pour le liquide d'amortissement est réalisé en une seule partie ayant la forme d'une spirale ;

- la figure 3 montre une variante de la cloison rigide dans laquelle le canal pour le liquide d'amortissement est réalisé en deux parties ayant la forme de deux hélices imbriquées, de même axe

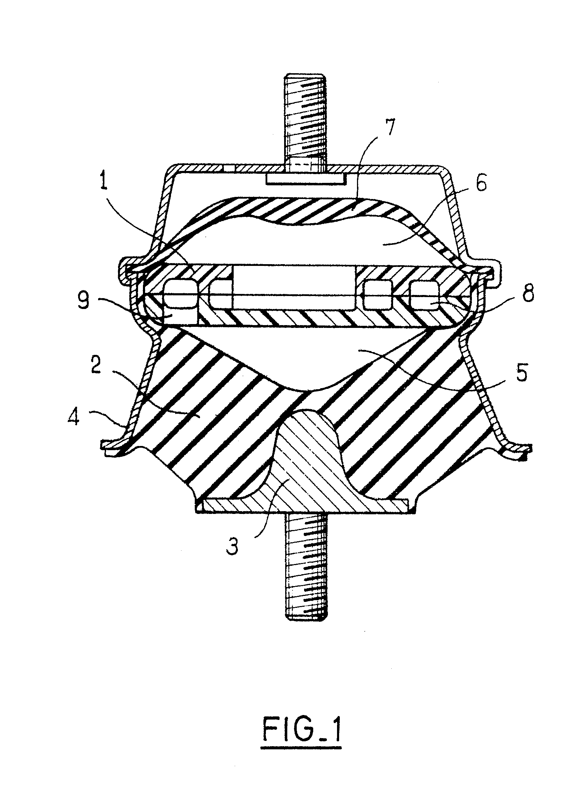

La figure 1 présente, en coupe verticale, le support élastique à amortissement hydraulique intégré et situe la cloison rigide (1) dans ledit support élastique formé d'une membrane conique épaisse (2), déformable, destinée à porter la charge par cisaillement de la composition élastomérique qui la constitue et qui relie les armatures rigides interne (3) de fixation à la structure du véhicule et externe (4) d'assujettissement au groupe moteur ou moto-propulseur du véhicule.

Le liquide d'amortissement remplit la chambre à volume variable (5) et un volume d'expansion (6) où une très faible surpression est maintenue par déformation de la membrane souple (7).

Le liquide d'amortissement est transféré, pour assurer l'amortissement en cours d'utilisation du support élastique, depuis la chambre à volume variable (5) jusqu'au volume d'expansion (6), par l'ouverture (9), à travers le canal (8) ménagé dans la cloison rigide (1).

Dans l'invention, la cloison rigide (1), préfabriquée, est formée de deux éléments rigides assemblés, préférentiellement réalisés à partir de matériaux polymériques, moulés à la forme voulue, selon un procédé classique dans l'industrie de transformation des polymères.

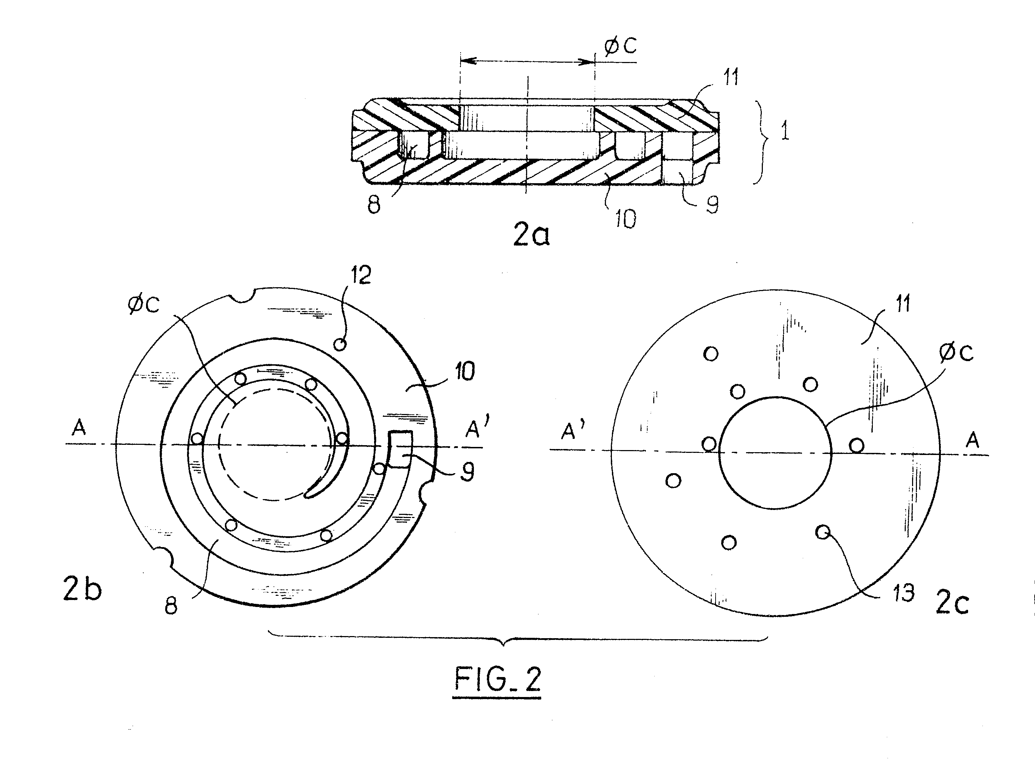

La figure 2 détaille une configuration particulière de la cloison rigide (1) dans laquelle le canal pour liquide d'amortissement (8) est réalisé en une seule partie ayant la forme d'une spirale.

La vue 2a est une coupe transversale de la cloison rigide (1), constituée d'une base (10) et d'un couvercle (11). En fonction de la section désirée pour le canal de liquide d'amortissement, la base (10) et le couvercle (11) de la cloison rigide (1) peuvent présenter une même géométrie du canal (8) - la seule différence entre la base (10) et le couvercle (11) étant alors le dispositif d'assemblage constitué de picots, en relief, sur la base (10) et de logements creux, correspondant en disposition dans le couvercle (11) -.

Dans la variante représentée de la cloison rigide (1), la base (10) comporte la totalité du canal pour liquide d'amortissement (8), le couvercle (11) présentant une face plane qui viendra, lors de l'assemblage, au contact de la base (10).

La communication du circuit de liquide d'amortissement avec la chambre à volume variable se fait par l'ouverture (9) ménagée au départ du canal (8), la communication avec le volume d'expansion se faisant par l'usinage d'un logement de diamètre variable (C), à la fois dans la base (10) et dans le couvercle (11), donc éventuellement, après assemblage de ces deux éléments constitutifs de la cloison rigide (1).

L'axe du logement à diamètre variable (C) n'est pas nécessairement confondu avec l'axe du support hydroélastique, son décalage axial ne modifiant pas le volume de liquide d'amortissement déplacé par la déformation de la chambre à volume variable.

La vue 2b représente une vue de dessus de la base (10) de la cloison rigide (1), avant assemblage avec le couvercle (11). Elle met en évidence la forme en spirale, du canal pour liquide d'amortissement (8) dont la longueur se développe sur plus d'un tour, et les picots d'assemblage (12), ici représentés - à titre d'exemple non limitatif - au nombre de huit, qui viendront prendre place dans les logements creux, en même nombre et dans la même disposition, portés par le couvercle (11).

L'usinage du diamètre (C) qui vient tangenter la spirale - constituant la totalité ou la moitié du canal pour liquide d'amortissement (8) selon la configuration choisie pour le couvercle (11) - se fera, avantageusement, sur la cloison rigide (1), après assemblage ; la fabrication en grande série de ladite cloison rigide (1) réalisée par moulage d'un polymère tel que - à titre d'exemple - un polyamide 6-6 chargé de fibres ou de billes de verre, peut être très automatisée.

La vue 2c montre, retourné, la variante du couvercle (11) de la cloison rigide (1) présentant une face plane qui viendra, lors de l'assemblage, au contact de la base (10). Cette vue illustre la disposition des logements creux (13) dont le nombre correspond aux picots (12) de la base (10). Le réglage du support hydroélastique à l'amortissement voulu, par le choix de la forme et des dimensions du canal pour liquide d'amortissement (8), permet de répondre à des conditions d'utilisation données, telle, par exemple, la fréquence perturbatrice apportée du fait des masses non suspendues de la suspension (ou bien du moteur lorsque le support hydroélastique est destiné à la suspension d'une cabine de poids lourd).

Toutes les rigidités étant égales par ailleurs, le fabricants des supports hydroélastiques peut jouer sur la masse de la colonne de liquide d'amortissement pour déplacer la fréquence à laquelle se produit le maximum d'amortissement apparent, par déphasage entre la vitesse et l'accélération, lors d'une mesure de vibrations forcées.

Un accroissement du diamètre du logement (C), à section constante de la colonne de liquide d'amortissement, diminue la longueur du canal en forme de spirale (8) qui vient couper l'alésage, la masse et la surface de la couche limite de ladite colonne de liquide d'amortissement se trouvant réduites, proportionnellement. Il en résulte un accroissement de la fréquence à laquelle l'amortissement est maximal, accompagné d'une réduction du taux d'amortissement et du déphasage.

Les conséquences inverses sont, évidemment, observées pour une réduction du diamètre du logement (C), à section constante de la colonne de liquide d'amortissement. Une réduction de profondeur du canal pour liquide d'amortissement (8), réalisable par lamage du plan d'assemblage de la base (10) et du couvercle (11) de la cloison rigide (1), provoque un effet de réduction de masse de la colonne de liquide d'amortissement semblable à celui provoqué par l'accroissement de diamètre du logement (C), mais avec réduction de la surface de la couche limite au contact des parois du canal pour liquide d'amortissement (8). A déplacement égal des parois déformables, constituées par la membrane conique épaisse du support hydroélastique, correspond un même débit instantané et une accélération inversement proportionnelle des déplacements du liquide d'amortissement dans la colonne de section réduite.

L'effet relatif de l'amortissement et du déphasage va en accroissement avec élévation de la fréquence, contrairement aux résultats obtenus par modification du diamètre du logement (C).

Si l'usinage plan de la face d'assemblage de la base (10) et du couvercle (11) de la cloison rigide (1) permet de réduire la section du canal pour liquide d'amortissement (8), il est des applications où l'effet inverse étant recherché, il est souhaitable d'accroître la section dudit canal. Pour ce faire, une cale plane sera insérée entre la base (10) et le couvercle (11) de la cloison rigide (1). L'épaisseur de ladite cale plane sera, bien évidemment, limitée par l'espace disponible entre la chambre à volume variable et le volume d'expansion.

La combinaison des ajustements du diamètre de l'alésage (C) et de la profondeu du canal pour liquide d'amortissement (8) permet donc le réglage, d'une manière très précise, du maximum d'efficacité du support hydroélastique en fonction des contraintes d'utilisation.

Dans les cas d'application qui nécessitent un élargissement des plages de fréquences, une variante de configuration (non représentée) du canal de liquide d'amortissement permettra deux réglages différents, grâce à la réalisation dudit canal en deux parties, en forme de spirales, enroulées l'une dans l'autre, en excentrant l'alésage (C) qui coupera la première spirale suivant une longueur développée inférieure à celle selon laquelle il coupera la deuxième spirale. De ce fait, les deux effets résonants, en s'additionnant avec des valeurs maximales décalées, permettront un amortissement optimal sur une plus large gamme de fréquences.

Il est même possible, pour certaines applications particulières, de réaliser, avec la configuration du canal pour liquide d'amortissement (8) à deux spirales, un réglage avec deux valeurs maximales d'amortissement.

Cet effet peut être obtenu soit par l'excentrage de l'alésage, indiqué ci-dessus, soit par une modification des sections des deux parties en spirales du canal pour liquide d'amortissement (8).

Une réduction de la section de l'une au moins des deux parties du canal (8) est obtenue par usinage oblique de la face d'assemblage de la base (10) et du couvercle (11) de la cloison rigide (1), alors qu'une augmentation de la section dudit canal (8) est rendue possible par l'insertion, au moment de l'assemblage, d'une cale oblique entre la base (10) et le couvercle (11) de la cloison rigide (1). Ces procédés permettent la modification de la section de l'une des parties en spirale du canal pour liquide d'amortissement (8), indépendamment de celle de l'autre partie. Si la même modification de la section est recherchée sur les deux parties en spirales du canal pour liquide d'amortissement (8), deux possibilités s'offrent au concepteur de la pièce : un usinage plan de la face d'assemblage de la base (10) et du couvercle (11) permet de réduire, simultanément la section des deux parties en spirales du canal (8), alors que l'insertion d'une cale plane entre la base (10) et le couvercle (11) de la cloison rigide (1), au moment de l'assemblage, permettra d'accroître, simultanément, la section des deux parties, en forme de spirales, du canal (8).

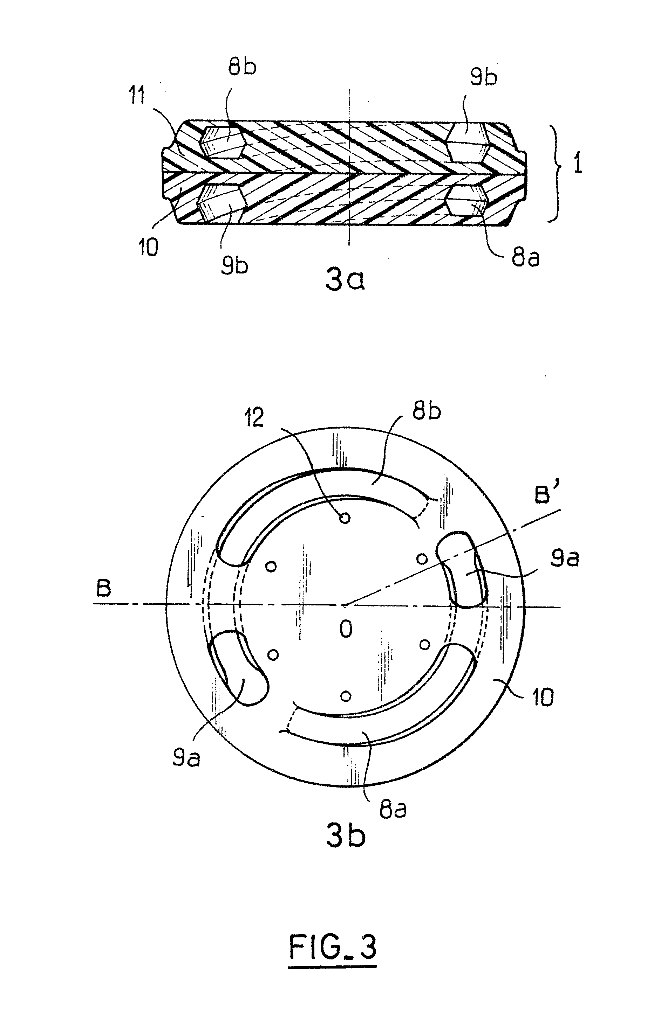

Comme dans le cas du canal en une partie, en forme de spirale, il est possible d'agir sur la longueur des deux parties du canal (8), en forme de spirales, par usinage de l'alésage où elles débouchent dans la cloison rigide (1). Le fabricant de supports hydroélastiques possède donc, du fait de la conception de la cloison rigide (1), une possibilité d'agir sur trois paramètres du circuit pour liquide d'amortissement, lui permettant les adaptations, au cours de l'assemblage des composants du support hydroélastique, à plusieurs types de moteurs ou de suspensions, de charges différentes, tout en bénéficiant des avantages de fabrication, en grande série, des composants c'est-à-dire un meilleur coût de production et une plus grande adaptabilité à des évolutions de caractéristiques, - lesdits composants étant tous identiques pour les différents modèles d'un même gamme, à l'exception de la cloison rigide (1) qui, ajustable, peut également être produite en grande série -. La figure 3 montre une variante de la cloison rigide (1) dans laquelle le canal pour liquide d'amortissement (8) est constitué non plus de deux spirales enroulées mais de deux hélices -, ici représentées cylindriques mais qui pourraient être coniques - imbriquées l'une dans l'autre, l'enroulement sur plus d'un tour étant obtenu par une légère pente de chacune des parties hélicoïdales du canal pour liquide d'amortissement (8), par rapport à l'axe de la cloison rigide (1).

La vue 3a montre une coupe, selon BOB′ de la vue 3b, de la cloison rigide (1) dans laquelle le couvercle (11) est représenté de même géométrie générale que la base (10), la différence entre ces deux composants étant la présence des picots d'assemblage, portés, par exemple, par la base (10) et destinés à s'engager dans les logements creux correspondants du couvercle (11).

Comme dans le cas de la cloison rigide à canal en forme de spirale, le couvercle (11) de ladite cloison rigide (1) pourrait être d'une géométrie différente de celle de la base (10) et - par exemple - présenter une face plane qui viendrait au contact de ladite base (10) au moment de l'assemblage.

Les ouvertures (9a) et (9b) peuvent être identiques, l'ouverture (9a) étant destinée à la communication entre l'une ou l'autre des deux parties (8a) et (8b), en forme d'hélices, du canal pour liquide d'amortissement et la chambre à volume variable, l'ouverture (9b) étant destinée à la communication entre l'une ou l'autre des deux parties (8a) et (8b), en forme d'hélices, du canal pour liquide d'amortissement et le volume d'expansion.

Les deux parties hélicoïdales (8a) et (8b) du canal pour liquide d'amortissement sont obtenues, par moulage, dans la base (10) et - éventuellement - dans le couvercle (11) de la cloison rigide (1) et permettent l'obtention d'une double colonne de liquide d'amortissement.

La vue 3b schématise la position des deux parties hélicoïdales (8a) et (8b) du canal pour liquide d'amortissement dans la base (10) de la cloison rigide (1) qui comporte les picots d'assemblage (12).

Différentes méthodes permettent de modifier, simultanément ou indépendamment, la longueur et/ou la section de la double colonne de liquide d'amortissement et, par conséquent, d'agir sur les caractéristiques d'amortissement du support hydroélastique.

C'est ainsi, par exemple, qu'un décalage angulaire, lors de l'assemblage, de la base (10) et du couvercle (11) de la cloison rigide (1), - rotation qui peut être d'un ou plusieurs picot(s) (12) par rapport aux logements creux correspondants portés par le couvercle (11) - modifie, en même temps, la section des deux parties hélicoïdales (8a) et (8b) du canal pour liquide d'amortissement, ainsi que la longueur utile de la colonne de liquide d'amortissement entre les deux ouvertures (9a) et (9b), permettant donc un réglage différent, en fréquence comme en déphasage, pour l'amortissement apparent de la rigidité dynamique présentée par le support hydroélastique.

Ce moyen de réglage, par décalage angulaire de la base (10) et du couvercle (11) de la cloison rigide (1) ne modifie pas l'encombrement extérieur de ladite cloison rigide. D'autres possibilités de réglage consistent à modifier l'épaisseur de la cloison rigide (1) et seront limitées à des valeurs compatibles avec le montage de ladite cloison rigide dans le corps du support hydroélastique.

Pour réduire, simultanément, la section des deux parties hélicoïdales (8a) et (8b) du canal pour liquide d'amortissement, il est possible de procéder à un usinage plan de la face d'assemblage de la base (10) et du couvercle (11) de la cloison rigide (1), par exemple en usinant la face du couvercle (11) comportant les logements creux destinés à recevoir les picots d'assemblage (12).

L'insertion, entre la base (10) et le couvercle (11) de la cloison rigide (1), au moment de l'assemblage, d'une cale plane permettra, au contraire, d'augmenter, en même temps, la section des deux parties hélicoïdales (8a) et (8b) du canal pour liquide d'amortissement.

Il est également possible d'agir, séparément, sur les dimensions des deux parties hélicoïdales (8a) et (8b) du canal pour liquide d'amortissement, soit en procédant à un usinage oblique de la face d'assemblage de la base (10) et du couvercle (11) de la cloison rigide (1) - ce qui a pour effet de réduire la section ainsi que la longueur utile de la double colonne de liquide d'amortissement à des valeurs différentes pour chacune des deux parties hélicoïdales (8a) et (8b) du canal pour liquide d'amortissement - soit en insérant entre la base (10) et le couvercle (11) une cale oblique de faible pente, au moment de l'assemblage de la cloison rigide (1) - ce qui a pour effet d'augmenter la section ainsi que la longueur utile de la double colonne de liquide d'amortissement à des valeurs différentes pour chacune des deux parties hélicoïdales (8a) et (8b) du canal pour liquide d'amortissement -.

La cloison rigide (1) à canal de forme hélicoïdale peut être simplifiée dans une variante (non représentée) comportant un canal en une seule partie, pour certaines applications. Les procédés de réglage des dimensions du canal hélicoïdal sont alors limités au décalage angulaire de la base (10) par rapport au couvercle (11) de la cloison rigide, au moment de l'assemblage, à l'usinage plan de la face d'assemblage de la base (10) et du couvercle (11) ou à l'insertion, entre la base (10) et le couvercle (11) d'une cale plane d'épaisseur limitée à des valeurs compatibles avec le montage de la cloison rigide (1) dans le support hydroélastique.

Un mode de réalisation du support hydroélastique, dans la configuration où la cloison rigide (1) comporte un canal en une seule partie pour le liquide d'amortissement (9) est décrit ci-après, le procédé de réglage choisi étant l'usinage de l'alésage.

Le support hydroélastique est produit par assemblage des composants, fabriqués séparément, selon les opérations suivantes :

- tout d'abord est réalisée, sous presse, au cours d'une opération de moulage familière à l'industrie de transformation du caoutchouc, la fabrication de l'ensemble constitué de l'armature rigide interne, de la membrane conique en composition élastomérique et de l'armature rigide externe, la liaison intime de ces trois éléments se produisant en simultanéité avec la vulcanisation de la composition élastomérique :

- indépendamment, est réalisée, par une opération de moulage, la paroi souple qui ferme le volume d'expansion.

- il est, par ailleurs, procédé à la fabrication des constituants - base et couvercle - de la cloison rigide. Les constituants sont réalisés par moulage du matériau polymérique, éventuellement renforcé par des charges, dans des empreintes présentant les formes voulues pour le canal du liquide d'amortissement et pour l'obtention des picots ou des logements creux d'assemblage selon qu'il s'agit de la base ou du couvercle ;

- l'opération suivante consiste en l'assemblage de la base et du couvercle pour former une cassette close. Cet assemblage est avantageusement réalisé par soudage aux ultra-sons.

- il est alors procédé à l'usinage de l'alésage où débouche le canal du liquide d'amortissement, en spirale ou hélicoïdal, pour régler sa longueur.

- les éléments constitutifs du support hydroélastique sont alors assemblés, une opération de sertissage terminant le montage sous la forme d'un boitier rigide. Si le sertissage est réalisé selon la technique dite "en sous-marin", le remplissage du support hydroélastique par le liquide d'amortissement se fait au cours de la même opération.

Une variante de remplissage du support hydroélastique par le liquide d'amortissement consiste à procéder par une technique de vide dans l'enceinte grâce à un alésage latéral sur le boitier rigide, qui est ensuite obturé par un rivet étanche.

Le dispositif d'isolation antivibratoire à amortissement hydraulique intégré, objet de l'invention, destiné à assurer la suspension élastique des groupes motopropulseurs des véhicules ou des cabines des poids lourds, présente l'avantage par rapport aux solutions de l'art antérieur de permettre, à partir d'éléments constitutifs identiques, de créer une gamme étendue de supports hydroélastiques adaptés à chaque application, grâce à l'insertion, au moment de l'assemblage, d'une cloison rigide comportant au moins un canal de liquide d'amortissement adapté - ou adaptable, en longueur et en section - à la fonction d'amortissement à assurer.

Grâce à cette conception, il est donc possible de réaliser de façon économique - même en quantité limitée - une grande variété de supports hydroélastiques à amortissement hydraulique intégré, parfaitement adaptés aux contraintes d'utilisation.

L'homme de l'art peut, bien entendu, apporter au dispositif élastique d'isolation antivibratoire à amortissement hydraulique intégré, objet de l'invention, et à ses variantes, décrites à titre d'exemples non limitatifs, diverses modifications sans sortir du cadre de l'invention.

## Revendications

1°) Dispositif élastique d'isolation antivibratoire à amortissement hydraulique intégré, comportant un support élastique constitué d'une membrane conique épaisse en composition élastomérique (2) adhérisée à une armature rigide interne (3) et à une armature rigide externe (4) et sertie dans un boitier rigide enfermant un liquide d'amortissement agissant par inertie d'une colonne de grande longueur par rapport à sa section moyenne, caractérisé en ce que la cloison rigide (1) qui sépare la chambre à volume variable (5) du volume d'expansion (6) comporte un canal pour le liquide d'amortissement (8), réalisé en une ou deux parties, dont les dimensions peuvent être réglées par usinage de l'un au moins des constituants - base (10) ou couvercle (11) - de ladite cloison rigide (1), ou insertion de cales entre lesdits constituants, permettant ainsi, à partir d'un ensemble de composants identiques, de réaliser une gamme de supports hydroélastiques à caractéristiques d'amortissement adaptées aux fréquences d'utilisation.

2°) Dispositif élastique d'isolation antivibratoire à amortissement hydraulique intégré selon la revendication 1, caractérisé en ce que la base (10) et le couvercle (11) qui constituent la cloison rigide (1) présentent la même géométrie pour le canal réalisé en une ou deux parties pour liquide d'amortissement, la base (10) comportant, en outre des picots d'assemblage (12) destinés à venir se placer dans les logements creux correspondants (13) portés par le couvercle (11).

3°) Dispositif élastique d'isolation antivibratoire à amortissement hydraulique intégré selon la revendication 1, caractérisé en ce que seule la base (10) de la cloison rigide (1) comporte un canal pour liquide d'amortissement réalisé en une ou deux parties, le couvercle (11) offrant une face plane qui vient, lors de l'assemblage, au contact de ladite base (10) par le dispositif des picots (12) de la base (10) et des logements creux correspondants (13) du couvercle (11).

4°) Dispositif élastique d'isolation antivibratoire à amortissement hydraulique intégré selon l'une des revendications 1 à 3, caractérisé en ce que la cloison rigide (1) comporte un canal pour liquide d'amortissement (8), réalisé en une ou deux parties, dont l'une au moins présente une longueur supérieure à la longueur d'un tour.

5°) Dispositif élastique d'isolation antivibratoire à amortissement hydraulique intégré selon l'une des revendications 1 à 4, caractérisé en ce que le canal pour liquide d'amortissement (8), ménagé dans la cloison rigide (1) est constitué d'une spirale unique.

6°) Dispositif élastique d'isolation antivibratoire à amortissement hydraulique intégré selon l'une des revendications 1 à 4, caractérisé en ce que le canal pour liquide d'amortissement (8), ménagé dans la cloison rigide (1) est constitué d'une hélice unique.

7°) Dispositif élastique d'isolation antivibratoire à amortissement hydraulique intégré selon l'une des revendications 1 à 4, caractérisé en ce que la cloison rigide (1) comporte un canal pour liquide d'amortissement réalisé en deux parties (8a) et (8b), en forme de spirales imbriquées, de même centre.

8°) Dispositif élastique d'isolation antivibratoire à amortissement hydraulique intégré selon l'une des revendications 1 à 4, caractérisé en ce que la cloison rigide (1) comporte un canal pour liquide d'amortissement réalisé en deux parties (8a) et (8b), en forme d'hélices imbriquées, de même axe.

9°) Dispositif élastique d'isolation antivibratoire à amortissement hydraulique intégré selon l'une des revendications 5 ou 7, caractérisé en ce que le réglage des dimensions du canal pour liquide d'amortissement (8), réalisé en une ou deux parties, en forme de spirale(s), se fait par usinage de l'alésage (A), où il débouche dans la cloison rigide (1).

10°) Dispositif élastique d'isolation antivibratoire à amortissement hydraulique intégré selon la revendication 7, caractérisé en ce que les longueurs des 2 parties en forme de spirales (8a) et (8b) du canal pour liquide d'amortissement peuvent être réglées, indépendamment l'une de l'autre, par excentrage de l'alésage où elles débouchent, de façon à accorder l'effet d'amortissement optimal sur deux fréquences différentes.

11°) Dispositif élastique d'isolation antivibratoire à amortissement hydraulique intégré selon l'une des revendications 6 ou 8, caractérisé en ce que les longueurs des 2 parties hélicoïdales (8a) et (8b) du canal pour liquide d'amortissement peuvent être réglées simultanément par rotation angulaire, lors de l'assemblage, de la base (10) et du couvercle (11) de la cloison rigide (1), en décalant les picots (12) de la base (10) par rapport aux logements creux correspondants (13) du couvercle (11) de la cloison rigide (1).

12°) Dispositif élastique d'isolation antivibratoire à amortissement hydraulique intégré selon l'une des revendications 7 ou 8, caractérisé en ce que les sections des 2 parties, en forme de spirales ou d'hélices, (8a) et (8b) du canal pour liquide d'amortissement peuvent être réglées, indépendamment l'une de l'autre, par un usinage oblique d'au moins une des faces d'assemblage de la base (10) et du couvercle (11) constitutifs de la cloison rigide (1), de façon à accorder l'effet d'amortissement optimal sur deux fréquences différentes.

13°) Dispositif élastique d'isolation antivibratoire à amortissement hydraulique intégré selon l'une des revendications 7 ou 8, caractérisé en ce que les sections des 2 parties, en forme de spirales ou d'hélices (8a) et (8b) du canal pour liquide d'amortissement peuvent être réglées, indépendamment l'une de l'autre, par insertion lors de l'assemblage d'une cale oblique entre la base (10) et le couvercle (11), constitutifs de la cloison rigide (1), de façon à accorder l'effet d'amortissement optimal sur deux fréquences différentes.

14°) Dispositif élastique d'isolation antivibratoire à amortissement hydraulique intégré selon l'une des revendications 1 à 8, caractérisé en ce que le réglage des sections du canal pour liquide d'amortissement (8), réalisé en une ou deux parties en forme de spirale(s) ou d'hélice(s), se fait par usinage plan de la face d'assemblage de l'un au moins des constituants - base (10) ou couvercle (11) - de la cloison rigide (1), le réglage des sections se faisant simultanément lorsque le canal comporte deux parties.

15°) Dispositif élastique d'isolation antivibratoire à amortissement hydraulique intégré selon l'une des revendications 1 à 8, caractérisé en ce que la section du canal pour liquide d'amortissement, réalisé en une ou deux parties en forme de spirale(s) ou d'hélice(s), peut être réglée par insertion, lors de l'assemblage, d'une cale plane entre la base (10) et le couvercle (11) constitutifs de la cloison rigide (1), le réglage étant simultané lorque le canal comporte deux parties.

0286527

FIG_1

$\varnothing C$

11

1

8

9

10

2a

12

$\varnothing C$

10

A — A'

9

2b

8

11

$\varnothing C$

A' — A

13   2c

## FIG. 2

0286527

3a

3b

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 155 646 (METZELER KAUTSCHUK) * Page 3, ligne 18 - page 7, ligne 9; figures 1-9 * | 1-3,6,8 ,11,13 | F 16 F 13/00 |
| A | EP-A-0 209 682 (CONTINENTAL GUMMI) * Page de garde; figures 1-3 * | 1,3-5 | |
| D,A | GB-A-2 186 052 (HONDA) * Page 2, lignes 50-94; figures 1-3b * | 1 | |
| A | EP-A-0 192 782 (BRIDGESTONE) | | |
| A_ | PATENT ABSTRACTS OF JAPAN, vol. 10, no. 218 (M-503)[2274], 30 juillet 1986; & JP-A-61 55 426 (BRIDGESTONE CORP.) 19-03-1986 | | |
| A | PATENT ABSTRACTS OF JAPAN, vol. 10, no. 346 (M-537)[2402], 21 novembre 1986; & JP-A-61 144 443 (KINUGAWA RUBBER IND. CO. LTD) 02-07-1986 | | |
| A | PATENT ABSTRACTS OF JAPAN, vol. 10, no. 211 (M-501)[2267], 24 juillet 1986; & JP-A-61 52 439 (TOYO TIRE & RUBBER CO. LTD) 15-03-1986 | | |

**DOMAINES TECHNIQUES RECHERCHES (Int. Cl.4)**

F 16 F

Le présent rapport a été établi pour toutes les revendications

| Lieu de la recherche | Date d'achèvement de la recherche | Examinateur |
|---|---|---|
| LA HAYE | 18-05-1988 | ESPEEL R.P. |